# FASCICULE DE BREVET EUROPEEN

(11) **EP 1 868 417 B1**
(45) Date de publication et mention de la délivrance du brevet: **13.10.2010**
(21) Numéro de dépôt: 07110112.5
(22) Date de dépôt: 12.06.2007
(51) Int. Cl.: H05B 6/06, H05B 6/12

(54) **Systeme a induction, procede d'alimentation d'un inducteur et table de cuisson comportant un tel systeme**
Induktionssystems, Verfahren zur Energieversorgung eines Induktors und Induktionskochfeld
Induction system, method for powering an inductor and cooktop comprising same

(30) Priorité: 14.06.2006 FR 0652131
(43) Date de publication de la demande: 19.12.2007
(73) Titulaire: FAGORBRANDT SAS, 92500 Rueil Malmaison (FR)
(72) Inventeur: Roux, Alain, 45160, SAINT-HILAIRE-SAINT-MESMIN (FR); Gouardo, Didier, 45520, CERCOTTES (FR)
(74) Mandataire: Stankoff, Hélène

(56) Documents cités:
- EP-A- 0 583 519
- EP-A1- 0 498 735
- EP-A1- 1 137 324
- FR-A1- 2 792 157

## Description

La présente invention concerne un système à induction, un procédé d'alimentation d'un inducteur et table de cuisson comportant un tel système. Elle s'applique en particulier aux tables de cuisson pour cuisines domestiques, professionnel ou collectives.

Les générateurs de courant alternatif utilisés dans les tables de cuisson par induction pour alimenter les foyers de cuisson comportent, généralement, deux sorties de puissance permettant, chacune, d'alimenter un inducteur. Un générateur comprend un module de puissance constitué typiquement d'un couple de transistors montés en demi-pont délivrant cycliquement le courant sur chaque sortie par l'intermédiaire d'un relais.

Une telle table de cuisson est connue du document EP 0 583 519.

Plus récemment, il a été proposé que les sorties de puissances correspondent à deux étages de sortie de puissance, chacun constitué typiquement d'un couple de transistors montés en demi-pont, chaque étage de sortie de puissance pouvant être commandé de façon indépendante ou simultanément.

Ces différents dispositifs présentent de nombreux inconvénients. Les étages de puissance sont dimensionnés par rapport à la puissance pouvant être délivrée aux inducteurs. Dans un générateur comportant deux sorties de puissances indépendantes, les deux sorties ont des puissances identiques dans le cadre d'une standardisation des composants et d'un coût optimisé. Les deux sorties de puissance peuvent être dimensionnées, par exemple, pour délivrer chacune 2000 W. Chaque inducteur connecté au générateur ne pourra donc avoir une puissance supérieure à 2000 W.

Or il est intéressant de pouvoir disposer d'une puissance supérieure sur une seule zone de cuisson, pour, par exemple, pouvoir monter rapidement à ébullition de grandes quantités de liquide sur une grande zone de cuisson.

Dans les dispositifs évoqués ci-dessus, chaque inducteur des foyers de cuisson étant connecté à une sortie de puissance dédié, pour obtenir un tel résultat, il conviendrait de dimensionner les deux sorties de puissances pour pouvoir délivrer une forte puissance, par exemple 4000 W. Ceci conduit à un générateur surdimensionné et d'un coût élevé.

Le document FR 2 792 157 décrit une table à induction dans laquelle, selon la position d'un commutateur, deux bobines d'un même inducteur peuvent être alimentées par deux étages de puissance ou une bobine de chacun de deux inducteurs différents est alimentée par un étage de puissance. Cette table à induction met en oeuvre plusieurs circuits oscillants composés de nombreux condensateurs et s'avère donc complexe, onéreuse et peu fiable.

Le document EP 0 498 735 décrit également un inducteur à trois bobines d'induction concentriques agencées pour former deux circuits en série distincts, mais alimentés par un même circuit d'alimentation, en fonction de la position des commutateurs.

La présente invention vise à remédier à ces inconvénients et à proposer un système d'alimentation permettant de fournir une puissance importante à un inducteur.

Ainsi, selon un premier aspect, la présente invention vise un système à inducteur comprenant au moins un inducteur et un dispositif d'alimentation d'un inducteur.

Selon l'invention :
- l'inducteur comporte au moins trois bobines d'induction, deux, au moins, desdites bobines étant montées chacune en série avec une troisième bobine, pour former deux circuits d'induction distincts comportant au moins une bobine commune, et
- le dispositif d'alimentation comporte, en outre un générateur comprenant, en parallèle, au moins deux étages de puissance et un commutateur adapté à relier, selon sa position, un seul ou deux des étages de puissance du générateur à un même circuit d'induction desdits deux circuits d'induction distincts.

Grâce à ces dispositions, dans au moins une position du commutateur, on peut alimenter l'inducteur avec l'intégralité de la puissance délivrée par les deux étages de puissance.

La présente invention enseigne ainsi de coupler deux sorties de puissance (deux demi ponts) d'un générateur sur un même inducteur. Dans ce cas, l'inducteur est dimensionné pour pouvoir délivrer une puissance maximale, par exemple 4000 W. Il est donc possible de délivrer, sur un seul inducteur, la puissance maximale que le générateur peut fournir.

Selon des caractéristiques particulières, le commutateur est adapté à relier, selon sa position, le même étage de puissance à l'un ou à l'autre des circuits d'induction.

Grâce à ces dispositions, selon la dimension du récipient posé sur l'inducteur, on peut alimenter l'un ou l'autre des circuits d'induction.

Selon des caractéristiques particulières, le commutateur comporte un commutateur primaire relié, en son entrée, à l'un des étages de puissance du générateur et en l'une de ses sorties, à l'entrée d'un commutateur secondaire, en parallèle à la sortie de l'autre étage de puissance du générateur, les sorties du commutateur secondaire étant, chacune, reliée à l'un des circuits d'induction.

Selon des caractéristiques particulières, le système à induction comprend un second inducteur, l'autre sortie du commutateur primaire étant reliée audit second inducteur.

Grâce à chacune de ces dispositions, deux inducteurs peuvent être prévus et alimentés par le dispositif d'alimentation.

Selon des caractéristiques particulières, le commutateur comporte, en outre, un commutateur tertiaire positionné entre le commutateur primaire et le commutateur secondaire, l'entrée du commutateur tertiaire étant reliée, en parallèle, à la sortie dudit autre étage de puissance et à une sortie du commutateur primaire, une sortie du commutateur tertiaire étant reliée à l'entrée du commutateur secondaire et l'autre sortie du commutateur tertiaire étant reliée audit second inducteur.

Grâce à ces dispositions, l'intégralité de la puissance délivrée par les deux étages de puissance peut être délivrée à l'un ou à l'autre des inducteurs.

Selon des caractéristiques particulières, lesdites bobines sont concentriques.

Grâce à ces dispositions, on peut répartir la puissance délivrée par les bobines sur une surface variable qui peut dépendre des dimensions du récipient posé sur l'inducteur.

Selon des caractéristiques particulières, la bobine commune auxdits deux circuits d'induction est la bobine interne des bobines concentriques.

Grâce à ces dispositions, dans toutes les positions du commutateur, le centre du récipient reçoit de l'énergie, ce qui favorise une bonne répartition de la puissance dissipée par l'inducteur.

Selon des caractéristiques particulières, le circuit d'induction que le commutateur est adapté à relier aux deux étages de puissance comporte la bobine externe des bobines concentriques.

Grâce à ces dispositions, l'intégralité de la puissance délivrée par les deux étages de puissance est délivrée sur une large surface adaptée aux récipients de grandes dimensions.

Selon des caractéristiques particulières, le système d'induction comporte, en outre, un circuit de commande adapté à commander la position du commutateur et les étages de puissance du générateur selon la dimension d'un récipient posé sur ledit inducteur.

Grâce à ces dispositions, le circuit de commande peut interdire que l'intégralité de la puissance soit dissipée par les étages de puissance à un récipient de petites dimensions.

Selon des caractéristiques particulières, le système d'induction comporte, en outre, un circuit de commande adapté à commander la position du commutateur et les étages de puissance du générateur selon le choix d'un utilisateur.

Grâce à ces dispositions, le circuit de commande peut tenir compte du nombre de foyers utilisés et de la consigne de puissance transmise par l'utilisateur, par exemple par la mise en oeuvre d'un clavier.

Selon des caractéristiques particulières, lorsque le commutateur alimente le même circuit d'induction avec deux étages de puissance, les étages de puissance fonctionnent de façon alternative.

Selon des caractéristiques particulières, lorsque le commutateur alimente le même circuit d'induction avec deux étages de puissance, les étages de puissance fonctionnent en simultané.

Selon un deuxième aspect, la présente invention vise une table de cuisson, caractérisée en ce qu'elle comporte un système à induction tel que succinctement exposé ci-dessus.

Selon un troisième aspect, la présente invention vise un procédé d'alimentation, par un générateur comprenant, en parallèle, au moins deux étages de puissance, d'un inducteur comportant au moins trois bobines d'induction, deux, au moins, desdites bobines étant montées chacune en série avec une troisième bobine, pour former deux circuits d'induction distincts comportant au moins une bobine commune, caractérisé en ce qu'il comporte :
- une étape de commutation d'un commutateur, dans une première position dans laquelle un premier circuit d'induction est alimenté par deux étages de puissance du générateur et
- une étape de commutation dudit commutateur, dans une deuxième position dans laquelle le premier circuit d'induction est alimenté par un seul étage de puissance du générateur.

Les avantages, buts et caractéristiques particulières de cette table d'induction et de ce procédé d'alimentation étant similaires à ceux du système tel que succinctement exposé ci-dessus, ils ne sont pas rappelés ici.

D'autres avantages, buts et caractéristiques de la présente invention ressortiront de la description qui va suivre, faite, dans un but explicatif et nullement limitatif, en regard des dessins annexés, dans lesquels :
- la figure 1 représente, schématiquement, un mode de réalisation particulier du système objet de la présente invention, comprenant un inducteur à trois bobines concentriques ;
- la figure 2 représente, schématiquement, un mode de réalisation particulier du système objet de la présente invention, comprenant deux inducteurs dont l'un a trois bobines concentriques,
- la figure 3 représente, schématiquement, un mode de réalisation particulier du système objet de la présente invention, comprenant deux inducteurs dont l'un a trois bobines concentriques et
- la figure 4 représente, schématiquement, une table de cuisson incorporant le mode de réalisation particulier du dispositif illustré en figure 3.

Avant de décrire des modes de réalisation particuliers du procédé et du système objets de la présente invention, on en donne, ci-après, une présentation générale.

L'invention concerne des modes de réalisation et de fonctionnement de générateurs de courant alternatif utilisés pour l'alimentation d'inducteurs dans les tables de cuisson par induction. La mise en oeuvre de la présente invention permet d'utiliser la puissance totale embarquée dans un générateur de courant disposant d'au moins deux sorties de puissance afin d'alimenter un inducteur à forte puissance.

Ce principe est, par exemple, appliqué à un foyer comportant plusieurs bobines concentriques et pouvant fonctionner à la puissance totale du générateur ou au moins à une puissance supérieure à celle pouvant être délivrée par une seule sortie de puissance.

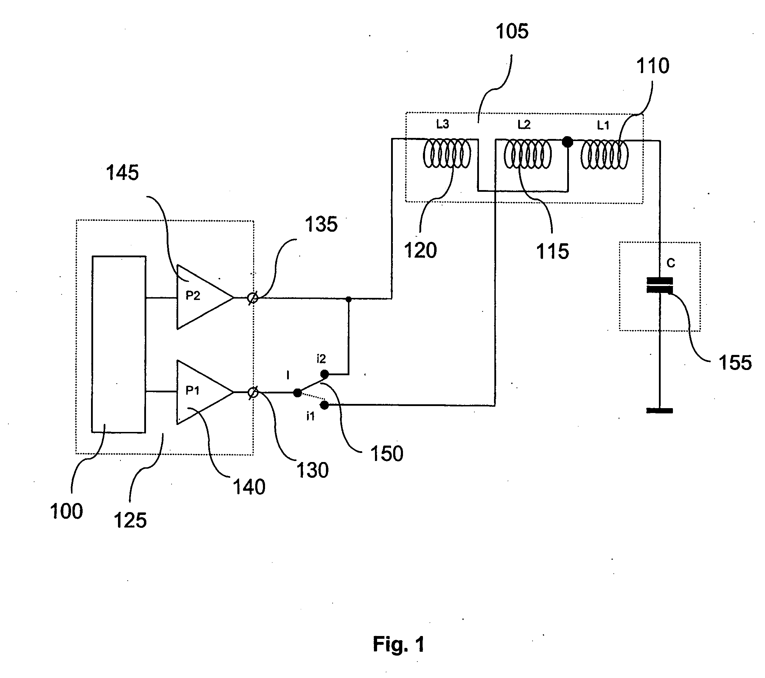

La figure 1 montre, schématiquement, un inducteur 105 à trois bobines concentriques 110, 115 et 120, connecté à un générateur de courant 125 comportant deux sorties indépendantes 130 et 135 associées à deux étage de puissance P1 140 et P2 145. La sortie 130 est munie d'un commutateur 150 permettant de diriger la sortie de l'étage de puissance 140 sur l'une ou l'autre bobines 115 ou 120, en fonction de la position i1 ou i2 du commutateur 150. L'inducteur 105 est connecté en série à un condensateur 155 C pour former, de façon classique, un circuit résonnant.

L'inducteur 105, comportant les trois bobines concentriques 110, 115 et 120, a l'avantage de pouvoir s'adapter au diamètre des récipients à chauffer. Dans un mode de réalisation, la bobine 110 est la bobine interne et la bobine 120 est la bobine externe, la bobine 115 se trouvant en intermédiaire entre les bobines 110 et 120. Pour les récipients de petit diamètre, pour lesquels la base du récipient recouvre la bobine 110 L1 mais ne dépasse pas la bobine 115 L2, le générateur 125 alimente uniquement un premier circuit d'induction constitué des bobinages 110 L1 et 115 L2, qui sont connectés en série, par l'étage de puissance P1 140, le commutateur 150 étant alors en position i1. L'étage de puissance 145 P2 est alors inopérant.

Si chaque étage de puissance du générateur est dimensionné pour délivrer une puissance maximale de 2000 W, par exemple, cette puissance de 2000 W sera délivrée à l'inducteur 105 dans sa configuration « petit récipient » en alimentant les bobines 110 L1 et 115 L2, par l'intermédiaire de l'étage de puissance 140 et du commutateur 150 en position i1.

Lorsque sur l'inducteur 105 est positionné un grand récipient qui recouvre, au moins en partie, la bobine 120 L3, le commutateur 150 est basculé en position i2 et l'étage de puissance 145 P2 est activé en parallèle de l'étage de puissance 140 P1. Les deux étages de puissances 140 P1 et 145 P2 alimentent ensemble un deuxième circuit d'induction comportant les bobines 120 L3 et 110 L1, qui sont connectées en série. La puissance délivrée à l'inducteur 105 peut donc être, au maximum, la puissance additionnée des deux étages de puissance 140 et 145, soit, par exemple, 4000 W.

Préférentiellement, la valeur moyenne de puissance délivrée par chacun des étages de puissance correspond à la moitié de la puissance totale délivrée par le générateur 125 à l'inducteur 105. Deux modes de fonctionnement du montage parallèle des étages de puissances 140 et 145 sont possibles :
- les étages de puissance 140 P1 et 145 P2 fonctionnent de façon alternative, chacun délivrant le maximum de puissance, 4000 W par exemple, selon un rapport cyclique de 50% ou
- les étages de puissance 140 P1 et 145 P2 fonctionnent en simultanés, chacun délivrant la moitié de la puissance en continu.
   Le circuit de commande 100, permet à l'utilisateur de choisir la puissance délivrée à chaque inducteur. Le circuit de commande 100 est adapté à commander automatiquement la position du commutateur 150 et les étages de puissance 140 et 145 du générateur 125 selon
- le choix de l'utilisateur et/ou la puissance demandée et
- la dimension d'un récipient posé sur l'inducteur 105, cette dimension étant détectée par des moyens connus de l'homme du métier.

Ainsi, si le récipient est trop petit pour atteindre la bobine externe 120, le commutateur est dans la position i1, quel que soit le choix de puissance effectué par l'utilisateur et seul l'étage de puissance 140 est opérationnel, pour délivrer de la puissance électrique en proportion de la demande de l'utilisateur. En revanche, si le récipient atteint la bobine externe 120, la position du commutateur 150 dépend du choix effectué par l'utilisateur de telle manière qu'au-delà d'une puissance limite demandée, le commutateur passe en position i2 et les deux étages de puissance 140 et 145 sont rendus opérationnels pour alimenter, alternativement ou simultanément les bobines 110 et 120.

Comme on le constate, le mode de réalisation particulier du système objet de la présente invention illustré en figure 1 présente les caractéristiques suivantes :
- l'inducteur 105 comporte au moins trois bobines d'induction 110, 115 et 120, les bobines 115 et 120 étant montées chacune en série avec la bobine 110, pour former deux circuits d'induction distincts comportant au moins une bobine commune, ici la bobine 110, et
- le dispositif d'alimentation comporte, en particulier :
   i) un générateur 125 comprenant, en parallèle, deux étages de puissance 140 et 145, et
   ii) un commutateur 150 adapté à relier, selon sa position, un seul ou deux des étages de puissance du générateur au même circuit d'induction constitué des bobines 110 et 120.

Dans ce mode de réalisation particulier, le commutateur 150 est adapté à relier, selon sa position, l'étage de puissance 140 à l'un ou à l'autre des circuits d'induction comportant, respectivement, les bobines 110 et 115, d'une part, et 110 et 120, d'autre part.

On observe que la bobine 110, commune à deux circuits d'induction, est la bobine interne des bobines concentriques 110, 115 et 120.

Le circuit d'induction comportant les bobines 110 et 120, que le commutateur 150 est adapté à relier aux deux étages de puissance 140 et 145, comporte la bobine 120, qui est la bobine externe des bobines concentriques.

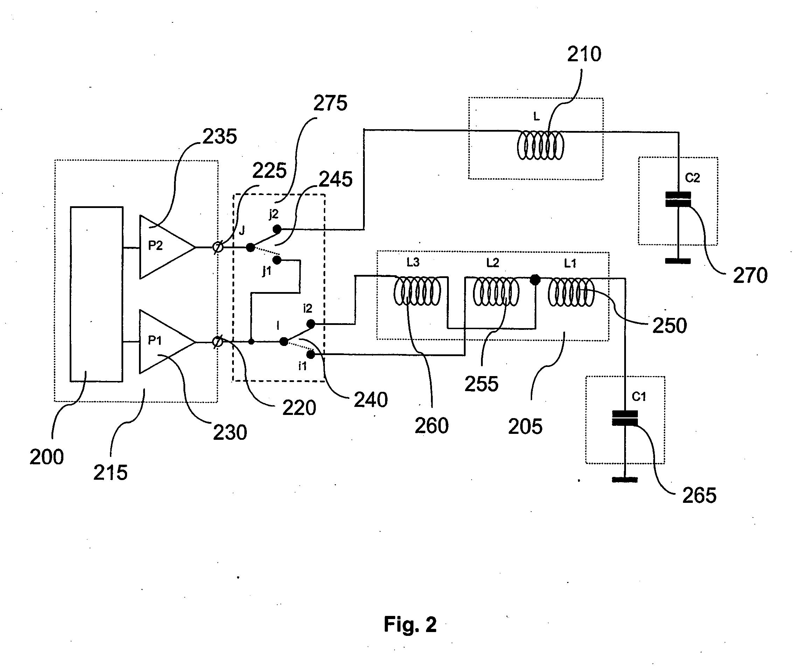

La figure 2 montre, schématiquement, deux inducteurs 205 et 210 connectés à un générateur de courant 215 comportant deux sorties indépendantes 220 et 225 associées à deux étages de puissance 230 P1 et 235 P2, les deux inducteurs 205 et 210 étant connectés au générateur 215 par l'intermédiaire d'un commutateur 275 comportant deux commutateurs 240 I et 245 J.

L'inducteur 205 est composé de trois bobines 250 L1, 255 L2 et 260 L3 répartis en deux circuits d'induction, le premier comportant les bobines 250 et 255 et le deuxième comportant les bobines 250 et 260.

L'inducteur 210, en revanche, est un inducteur simple monobobinage (L). Les deux inducteurs 205 et 210 sont connectés, respectivement, en série aux condensateurs 265 C1 et 270 C2, pour former, chacun, un circuit résonnant.

Dans un premier mode de fonctionnement, le commutateur 245 J est en position j2, l'inducteur 210 étant alors alimenté par l'étage de puissance 235 P2 du générateur 215. Le commutateur 240 I peut être positionné automatiquement, selon des techniques connues, en position i1 ou en position i2, en fonction du diamètre de récipient posé sur la zone de cuisson associée à l'inducteur 205 qui est, alors, alimenté par l'étage de puissance 230 P1. Les deux étages de puissance 230 P1 et 235 P2 délivrent respectivement leur puissance aux inducteurs 205 et 210 de façon indépendante. La puissance maximale délivrée par chaque inducteur ne pouvant être, au maximum, que la puissance maximale de chaque étage de puissance du générateur 215 (par exemple 2000 W).

Dans un second mode de fonctionnement, le commutateur 245 J est en position j1. L'inducteur 210 est alors déconnecté et ne peut être activé. L'inducteur 205 est alors connecté aux deux étages de puissance 230 P1 et 235 P2 du générateur 215 et peut ainsi fonctionner à une puissance maximale correspondant à la puissance globale du générateur 215, c'est-à-dire la somme des puissances des étages 230 P1 et 235 P2, par exemple 4000 W, quelle que soit la position du commutateur 240 I.

Préférentiellement, la valeur moyenne de puissance délivrée par chacun des étages de puissance 230 et 235 correspond à la moitié de la puissance totale délivrée par le générateur 215 à l'inducteur 205.

Dans ce second mode de fonctionnement, deux sous-modes de fonctionnement sont également possibles, comme dans le mode de réalisation illustré en regard de la figure 1 :
- les étages de puissance 230 P1 et 235 P2 fonctionnent de façon alternative, chacun délivrant le maximum de puissance, 4000 W par exemple, selon un rapport cyclique de 50%.
- les étages de puissance 230 P1 et 235 P2 fonctionnent simultanément, chacun délivrant la moitié de la puissance en continu.

Le circuit de commande 200, permet à l'utilisateur de choisir la puissance délivrée à chaque inducteur. Le circuit de commande 200 est adapté à commander automatiquement la position du commutateur constitué des commutateurs 240 et 245 et les étages de puissance 230 et 235 du générateur 215 selon :
- le choix de l'utilisateur, le nombre de foyers utilisés et/ou la puissance demandée et
- la dimension d'un récipient posé sur l'inducteur 205, cette dimension étant détectée par des moyens connus de l'homme du métier.

Ainsi, si le récipient est trop petit pour atteindre la bobine externe 260, le commutateur 240 est dans la position i1, quel que soit le choix de puissance effectué par l'utilisateur.

En revanche, si le récipient atteint la bobine externe 260, la position du commutateur 240 est dans la position i2, afin de mieux répartir la dissipation de chaleur sur l'ensemble de la surface inférieure du récipient. La position du commutateur 245 dépend, de son côté, du choix effectué par l'utilisateur de telle manière qu'au-delà d'une puissance limite demandée, et au cas où le chauffage par l'inducteur 210 n'est pas requis par l'utilisateur, le commutateur 245 passe en position j1 et les deux étages de puissance 230 et 235 sont rendus opérationnels pour alimenter l'inducteur, alternativement ou simultanément.

Comme on le constate, le mode de réalisation particulier du système objet de la présente invention illustré en figure 2 présente les caractéristiques suivantes :
- l'inducteur 205 comporte au moins trois bobines d'induction 250, 255 et 260, les bobines 255 et 260 étant montées chacune en série avec la bobine 250, pour former deux circuits d'induction distincts comportant la bobine 250, commune aux deux circuits d'induction, et
- le dispositif d'alimentation comporte :
   a) le générateur 215 comprenant, en parallèle, au moins deux étages de puissance 230 et 235 et
   b) un commutateur, constitué des commutateur 240 et 245, adapté à relier, selon sa position, un seul ou les deux étages de puissance du générateur au même circuit d'induction, qui peut, ici, être le circuit d'induction comportant les bobines 250 et 255 ou le circuit d'induction comportant les bobines 250 et 260.

Le commutateur, constitué des commutateurs 240 et 245, est adapté à relier, selon sa position, le même étage de puissance 235 à l'un ou à l'autre des circuits d'induction.

Dans ce mode de réalisation, le commutateur comporte un commutateur primaire 245 relié, en son entrée, à l'étage de puissance 235 du générateur 215 et en l'une de ses sorties, à l'entrée d'un commutateur secondaire 240, en parallèle à la sortie de l'étage de puissance 230 du générateur 215, les sorties du commutateur secondaire 240 étant, chacune, reliée à l'un des circuits d'induction.

L'autre sortie du commutateur primaire 245 est reliée à un autre inducteur 210.

On observe que la bobine 250, commune aux deux circuits d'induction, est la bobine interne des bobines concentriques 250, 255 et 260.

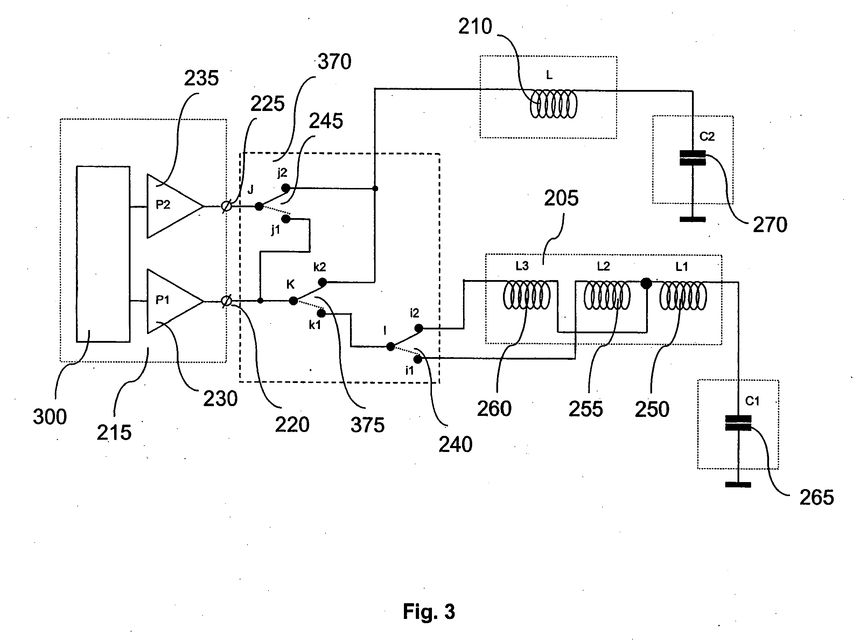

La figure 3 montre un mode de réalisation du dispositif objet de la présente invention voisin du mode de réalisation illustré en figure 2. Dans le mode de réalisation illustré en figure 3, on retrouve les composants illustrés en figure 2, à ceci près qu'un commutateur 375 K est ajouté aux commutateurs 240 et 245 pour constituer un commutateur 370. Le commutateur 375 permet d'alimenter l'inducteur 210 avec toute la puissance du générateur 215, c'est-à-dire avec les deux sorties de puissances dirigées sur cet inducteur 210, les commutateurs 245 et 375 étant, respectivement, en positions j1 et k2 ou en positions j2 et k2. Dans l'une des ces configurations, l'inducteur 205 est déconnecté et ne peut être activé. Si le commutateur 375 est basculé en position k1, les modes de fonctionnement sont identiques à ceux illustrés en regard de la figure 2.

Le circuit de commande 300 permet à l'utilisateur de choisir la puissance délivrée à chaque inducteur. Le circuit de commande 300 est adapté à commander automatiquement la position du commutateur constitué des commutateurs 240, 245 et 375 et les étages de puissance 230 et 235 du générateur 215 selon :
- le choix de l'utilisateur, le nombre de foyers utilisés et/ou la puissance demandée et
- la dimension d'un récipient posé sur l'inducteur 205, cette dimension étant détectée par des moyens connus de l'homme du métier.

Si seul l'inducteur 210 est recouvert par le récipient et que l'utilisateur requiert plus qu'une puissance limite prédéterminée du générateur sur l'inducteur 210, le commutateur 375 est mis dans la position k2 afin d'alimenter l'inducteur 210. Les deux étages de puissance 230 et 235 sont rendus opérationnels pour alimenter l'inducteur 210, alternativement ou simultanément.

Si seul l'inducteur 205 est recouvert par un récipient et que le récipient est trop petit pour atteindre la bobine externe 260, le commutateur 375 est dans la position k1 et le commutateur 240 est dans la position i1, quel que soit le choix de puissance effectué par l'utilisateur.

En revanche, si le récipient atteint la bobine externe 260, le commutateur 375 est dans la position k1 et la position du commutateur 240 est la position i2, afin de mieux répartir la dissipation de chaleur sur l'ensemble de la surface inférieure du récipient. La position du commutateur 245 dépend, de son côté, du choix effectué par l'utilisateur de telle manière qu'au-delà d'une puissance limite demandée, le commutateur 245 passe en position j1 et les deux étages de puissance 230 et 235 sont rendus opérationnels pour alimenter l'inducteur 205, alternativement ou simultanément.

Le mode de réalisation particulier du dispositif objet de la présente invention illustré en figure 3 présente les mêmes caractéristiques que le mode de réalisation particulier illustré en figure 2, à ceci prêt que le commutateur, constitué des commutateurs 240, 245 et 375, comporte le commutateur tertiaire 375 qui est positionné entre le commutateur primaire 245 et le commutateur secondaire 240, l'entrée du commutateur tertiaire étant reliée, en parallèle, à l'étage de puissance 230 et à une sortie du commutateur primaire 245, une sortie du commutateur tertiaire 375 étant reliée à l'entrée du commutateur secondaire 240 et l'autre sortie du commutateur tertiaire 375 étant reliée à l'inducteur 210.

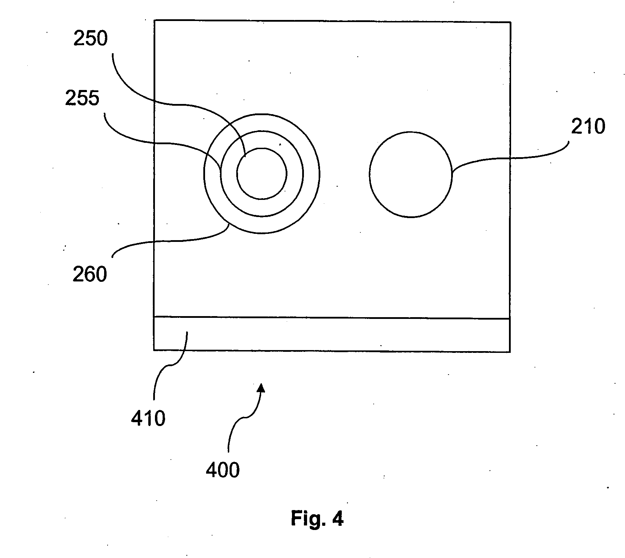

On a représenté, en figure 4, une table de cuisson 400 incorporant le mode de réalisation particulier du dispositif objet de la présente invention illustré en figure 3. On observe, en figure 4, un clavier 410 relié en entrée du circuit de commande 200 ou 300, les bobines concentriques 250, 255 et 260 de l'inducteur 205 et l'inducteur mono-bobine 210.

## Revendications

1. Système à induction comprenant au moins un inducteur (105, 205) et un dispositif d'alimentation d'un inducteur (105, 205), **caractérisé en ce que** :
- ledit inducteur comporte au moins trois bobines d'induction (110, 115, 120, 250, 255, 260), deux, au moins, des dites bobines étant montées chacune en série avec une troisième bobine (110, 250), pour former deux circuits d'induction distincts comportant au moins une bobine commune (110, 250), et
- **en ce que** ledit dispositif d'alimentation comporte un générateur (125, 215) comprenant, en parallèle, au moins deux étages de puissance (140, 145, 230, 235) et un commutateur (150, 275, 370) adapté à relier, selon sa position, un seul ou deux des étages de puissance du générateur à un même circuit d'induction desdits deux circuits d'induction distincts.

2. Système selon la revendication 1, **caractérisé en ce que** le commutateur (150, 275, 370) est adapté à relier, selon sa position, le même étage de puissance (140, 230, 235) à l'un ou à l'autre des circuits d'induction.

3. Système selon l'une quelconque des revendications 1 ou 2, **caractérisé en ce que** le commutateur (275, 370) comporte un commutateur primaire (245) relié, en son entrée, à l'un des étages de puissance du générateur et en l'une de ses sorties, à l'entrée d'un commutateur secondaire (240), en parallèle à la sortie de l'autre étage de puissance du générateur, les sorties du commutateur secondaire étant, chacune, reliée à l'un des circuits d'induction.

4. Système selon la revendication 3, **caractérisé en ce qu'**il comprend un second inducteur (210), l'autre sortie du commutateur primaire (245) étant reliée audit second inducteur (210).

5. Système selon la revendication 4, **caractérisé en ce que** le commutateur (370) comporte, en outre, un commutateur tertiaire (375) positionné entre le commutateur primaire (245) et le commutateur secondaire (240), l'entrée du commutateur tertiaire étant reliée, en parallèle, à la sortie dudit autre étage de puissance et à une sortie du commutateur primaire, une sortie du commutateur tertiaire étant reliée à l'entrée du commutateur secondaire et l'autre sortie du commutateur tertiaire étant reliée audit second inducteur.

6. Système selon l'une quelconque des revendications 1 à 5, **caractérisé en ce que** lesdites bobines (110, 115, 120, 250, 255, 260) sont concentriques.

7. Système selon la revendication 6, **caractérisé en ce que** la bobine commune (110, 250) auxdits deux circuits d'induction est la bobine interne des bobines concentriques.

8. Système selon l'une quelconque des revendications 6 ou 7, **caractérisé en ce que** le circuit d'induction que le commutateur est adapté à relier aux deux étages de puissance comporte la bobine externe (120, 260) des bobines concentriques.

9. Système selon l'une quelconque des revendications 1 à 8, **caractérisé en ce qu'**il comporte un circuit de commande (100, 200) adapté à commander la position du commutateur et les étages de puissance du générateur selon la dimension d'un récipient posé sur ledit inducteur.

10. Système selon l'une quelconque des revendications 1 à 9, **caractérisé en ce qu'**il comporte un circuit de commande (100, 200) adapté à commander la position du commutateur et les étages de puissance du générateur selon le choix d'un utilisateur.

11. Système selon l'une quelconque des revendications 1 à 10, **caractérisé en ce que**, lorsque le commutateur (150, 275, 370) alimente le même circuit d'induction avec deux étages de puissance, les étages de puissance fonctionnent de façon alternative.

12. Système selon l'une quelconque des revendications 1 à 10, **caractérisé en ce que**, lorsque le commutateur (150, 275, 370) alimente le même circuit d'induction avec deux étages de puissance, les étages de puissance fonctionnent en simultané.

13. Table de cuisson (400), **caractérisée en ce qu'**elle comporte au moins un système à induction selon l'une quelconque des revendications 1 à 12.

14. Procédé d'alimentation, par un générateur comprenant, en parallèle, au moins deux étages de puissance, d'un inducteur comportant au moins trois bobines d'induction, deux, au moins, desdites bobines étant montées chacune en série avec une troisième bobine, pour former deux circuits d'induction distincts comportant au moins une bobine commune, **caractérisé en ce qu'**il comporte :
- une étape de commutation d'un commutateur, dans une première position dans laquelle un premier circuit d'induction est alimenté par deux étages de puissance du générateur, et
- une étape de commutation dudit commutateur, dans une deuxième position dans laquelle ledit premier circuit d'induction est alimenté par un seul étage de puissance du générateur.

## Claims

1. Induction system comprising at least one inductor (105, 205) and a device supplying an inductor (105, 205), **characterised in that**:
- said inductor comprises at least three induction coils (110, 115, 120, 250, 255, 260), at least two of the said coils being each connected in series with a third coil (110, 250) in order to form two distinct induction circuits comprising at least one common coil (110, 250), and
- **in that** said supply device comprises a generator (125, 215) comprising, in parallel, at least two power stages (140, 145, 230, 235) and a switch (150, 275, 370) adapted to connect, according to its position, one only or two of the power stages of the generator in the same induction circuit of said two distinct induction circuits.

2. System according to claim 1, **characterised in that** the switch (150, 275, 370) is adapted to connect, according to its position, the same power stage (140, 230, 235) to one or other of the induction circuits.

3. System according to either one of claims 1 or 2, **characterised in that** the switch (275, 370) comprises a primary switch (245) connected, at its input, to one of the power stages of the generator and, at one of its outputs, to the input of a secondary switch (240), in parallel to the output of the other power stage of the generator, the outputs of the secondary switch each being connected to one of the induction circuits.

4. System according to claim 3, **characterised in that** it comprises a second inductor (210), the other output of the primary switch (245) being connected to said second inductor (210).

5. System according to claim 4, **characterised in that** the switch (370) also comprises a tertiary switch (375) positioned between the primary switch (245) and the secondary switch (240), the input of the tertiary switch being connected in parallel to the output of said other power stage and to an output of the primary switch, an output of the tertiary switch being connected to the input of the input of the secondary switch and the other output of the tertiary switch being connected to said second inductor.

6. System according to any one of claims 1 Lo 5, **characterised in that** said coils (110, 115, 120, 250, 255, 260) are concentric.

7. System according to claim 6, **characterised in that** the coil (110, 250) common to said two induction circuits is the internal coil of the concentric coils.

8. System according to either one of claims 6 or 7, **characterised in that** the induction circuit that the switch is adapted to connect to the two power stages comprises the external coil (120, 260) of the concentric coils.

9. System according to any one of claims 1 to 8, **characterised in that** it comprises a control circuit (100, 200) adapted to control the position of the switch and the power stages of the generator according to the dimension of a receptacle placed on the said inductor.

10. System according to any one of claims 1 to 9, **characterised in that** it comprises a control circuit (100, 200) adapted to control the position of the switch and the power stages of the generator according to the choice of a user.

11. System according to any one of claims 1 to 10, **characterised in that**, when the switch (150, 275, 370) supplies the same induction circuit with two power stages, the power stages function alternately.

12. System according to any one of claims 1 to 10, **characterised in that**, when the switch (150, 275, 370) supplies the same induction circuit with two power stages, the power stages function simultaneously.

13. Hob (400), **characterised in that** it comprises at least one induction system according to any one of claims 1 to 12.

14. Method of supplying an inductor comprising at least three induction coils, by means of a generator comprising, in parallel, at least two power stages, at least two of said coils each being connected in series with a third coil, in order to form two distinct induction circuits comprising at least one common coil, **characterised in that** it comprises:
- a step of switching a switch into a first position in which a first induction circuit is supplied by two power stages of the generator, and
- a step of switching said switch into a second position in which said first induction circuit is supplied by a single power stage of the generator.

## Patentansprüche

1. Induktionssystem, mit mindestens einem Induktor (105, 205) und einer Vorrichtung zur Versorgung eines Induktors (105, 205), **dadurch gekennzeichnet, dass**
- der Induktor mindestens drei Induktorspulen (110, 115, 120, 250, 255, 2S0) aufweist, wobei mindestens zwei der Spulen jeweils mit einer dritten Spule (110, 250) in Reihe geschaltet sind, so dass zwei getrennte Induktionskreise gebildet sind, die mindestens eine gemeinsame Spule (110, 250) aufweisen, und
- die Versorgungsvorrichtung einen Generator (125, 215) mit mindestens zwei parallel geschalteten Leistungsstufen (140, 145, 230, 235) und einem Schalter (150, 275, 370) aufweist, welcher in Abhängigkeit von seiner Stellung eine oder zwei der Leistungsstufen des Generators mit ein und demselben Induktionskreis der beiden getrennten Induktionskreise verbinden kann.

2. System nach Anspruch 1, **dadurch gekennzeichnet, dass** der Schalter (150, 275, 370) in Abhängigkeit von seiner Stellung ein und dieselbe Leistungsstufe (140, 230, 235) mit dem einen oder mit dem anderen der Induktionskreise verbinden kann.

3. System nach Anspruch 1 oder 2, **dadurch gekennzeichnet, dass** der Schalter (275, 370) einen primären Schalter (245) aufweist, der an seinem Eingang mit einer der Leistungsstufen des Generators und an einem seiner Ausgänge parallel zum Ausgang der anderen Leistungsstufe des Generators mit dem Eingang eines sekundären Schalters (240) verbunden ist, wobei die Ausgänge des sekundären Schalters jeweils mit einem der Induktionskreise verbunden sind.

4. System nach Anspruch 3, **dadurch gekennzeichnet, dass** es einen zweiten Induktor (210) aufweist, wobei der andere Ausgang des primären Schalters (245) mit dem zweiten Induktor (210) verbunden ist.

5. System nach Anspruch 4, **dadurch gekennzeichnet, dass** der Schalter (370) ferner einen tertiären Schalter (375) umfasst, der zwischen dem primären Schalter (245) und dem sekundären Schalter (240) angeordnet ist, wobei der Eingang des tertiären Schalters parallel mit dem Ausgang der anderen Leistungsstufe und mit einem Ausgang des primären Schalters verbunden ist, wobei ein Ausgang des tertiären Schalters mit dem Eingang des sekundären Schalters und der andere Ausgang des tertiären Schalters mit dem zweiten Induktor verbunden ist.

6. System nach einem der Ansprüche 1 bis 5, **dadurch gekennzeichnet, dass** die Spulen (110, 115, 120, 250, 255, 260) konzentrisch sind.

7. System nach Anspruch 6, **dadurch gekennzeichnet, dass** die Spule (110, 250), die die beiden Induktionskreise gemeinsam haben, die innere Spule der konzentrischen Spulen ist.

8. System nach Anspruch 6 oder 7, **dadurch gekennzeichnet, dass** der Induktionskreis, den der Schalter mit den beiden Leistungsstufen verbinden kann, die äußere Spule (120, 260) der konzentrischen Spulen aufweist.

9. System nach einem der Ansprüche 1 bis 8, **dadurch gekennzeichnet, dass** es einen Steuerkreis (100, 200) aufweist, der die Stellung des Schalters und die Leistungsstufen des Generators in Abhängigkeit von der Abmessung eines auf den Induktor abgestellten Gefäßes steuern kann.

10. System nach einem der Ansprüche 1 bis 9, **dadurch gekennzeichnet, dass** es einen Steuerkreis (100, 200) aufweist, der die Stellung des Schalters und die Leistungsstufen des Generators in Abhängigkeit von der Wahl eines Benutzers steuern kann.

11. System nach einem der Ansprüche 1 bis 10, **dadurch gekennzeichnet, dass** die Leistungsstufen alternativ arbeiten, wenn der Schalter (150, 275, 370) ein und denselben Induktionskreis mit zwei Leistungsstufen speist.

12. System nach einem der Ansprüche 1 bis 10, **dadurch gekennzeichnet, dass** die Leistungsstufen simultan arbeiten, wenn der Schalter (150, 275, 370) ein und denselben Induktionskreis mit zwei Leistungsstufen speist.

13. Kochfeld (400), **dadurch gekennzeichnet, dass** es mindestens ein Induktionssystem nach einem der Ansprüche 1 bis 12 aufweist.

14. Verfahren zum Speisen, mittels eines Generators mit mindestens zwei parallel geschalteten Leistungsstufen, eines Induktors, der mindestens drei Induktorspulen aufweist, wobei mindestens zwei der Spulen jeweils mit einer dritten Spule in Reihe geschaltet sind, so dass zwei getrennte Induktionskreise gebildet sind, die mindestens eine gemeinsame Spule aufweisen, **dadurch gekennzeichnet, dass** es Folgendes umfasst:
- einen Schritt zum Schalten eines Schalters in eine erste Stellung, in der ein erster Induktionskreis von zwei Leistungsstufen des Generators gespeist wird, und
- einen Schritt zum Schalten des Schalters in eine zweite Stellung, in der der erste Induktionskreis von einer einzigen Leistungsstufe des Generators gespeist wird.
